# EUROPÄISCHE PATENTANMELDUNG

(11) **EP 2 653 746 A2**
(43) Veröffentlichungstag der Anmeldung: **23.10.2013**
(21) Anmeldenummer: 13160071.0
(22) Anmeldetag: 20.03.2013
(51) Int. Cl.: F16F 1/16, B60G 21/055

(54) **Elastomerlager zur Lagerung eines als Stabilisator ausgebildeten stabförmigen Lagerelements**

(30) Priorität: 19.04.2012 DE 102012206453
(71) Anmelder: ZF Friedrichshafen AG, 88038 Friedrichshafen (DE)
(72) Erfinder: Kuemper, Bernd, 32369 Rahden (DE)

(57) **Zusammenfassung**

Die Erfindung betrifft ein Elastomerlager (1) zur Lagerung eines als Stabilisator (3) ausgebildeten stabförmigen Lagerelements. Das Elastomerlager (1) zeichnet sich durch zumindest einen Elastomerkörper (7) aus, der einen Aufnahmebereich (9) zur umschließbaren Aufnahme des stabförmigen Lagerelements (3) umfasst, wobei der Aufnahmebereich (9) des Elastomerkörpers (7) ein Klebemittel (13) zur Ausbildung einer zumindest mittelbaren Klebeverbindung zwischen dem Elastomerkörper (7) und dem stabförmigen Lagerelement (3) aufweist. Das Klebemittel (13) ist zumindest im Ausgangszustand als im festen Aggregatzustand vorliegende, dauerklebrige Haftklebemasse (13) ausgebildet. Es wird weiterhin eine Lageranordnung (5) für ein Fahrwerk eines Kraftfahrzeuges vorgeschlagen, umfassend ein Elastomerlager (1) wie zuvor beschrieben und ein in dem Aufnahmebereich (9) des Elastomerlagers (1) durch das Klebemittel (13) festgelegtes stabförmiges Lagerelement (3).

## Beschreibung

Die Erfindung betrifft ein Elastomerlager zur Lagerung eines als Stabilisator ausgebildeten stabförmigen Lagerelements gemäß dem Oberbegriff des Patentanspruchs 1 und eine Lageranordnung unter Verwendung eines solchen Elastomerlagers gemäß Patentanspruch 8.

Gattungsgemäße Elastomerlager bzw. Lageranordnungen werden neben der Lagerung von Stabilisatoren beispielsweise auch zur Lagerung von Lenkerbauteilen in Fahrwerken von Kraftfahrzeugen eingesetzt. In der Praxis werden die Stabilisatoren zumeist entweder mit vormontierten und stoffschlüssig mit dem Stabilisator verbundenen Elastomerlagern ausgeliefert oder die Montage von Elastomerlager und Stabilisator erfolgt im Zuge der Befestigung des Stabilisators am Hilfsrahmen oder an der Karosserie.

Stoffschlüssige Verbindungen zwischen Stabilisator und Elastomerlager werden durch Vulkanisation oder durch Klebungen realisiert.

Aus der DE 102 31 311 B4 ist ein gattungsgemäßes Elastomerlager bekannt, dass über eine Klebeverbindung mit einem Stabilisator verbunden ist. Die Fügestellen von Stabilisator und / oder Elastomerlager werden zur Vorbereitung der Klebung mit einer streich- oder spritzfähigen Dispersion aus einem Lösungsmittel und einem mikroverkapseltem Klebstoff beschichtet. Nach der Montage werden die Fügepartner mit Druck und / oder einer Relativbewegung zueinander beaufschlagt, um einen Teil oder alle Mikrokapseln zu zerstören und den darin befindlichen Kleber freizugeben. Nach einer Fixierungsphase von beispielsweise 10 bis 15 Minuten Dauer und einer anschließenden mehrstündigen Aushärtungszeit ist eine dauerhafte Verbindung zwischen dem Elastomerlager und Stabilisator bzw. Fahrwerksglied gegeben.

Aufgabe der Erfindung ist es, ein Elastomerlager bereitzustellen, das prozesssicher und durch die Realisierung von kurzen Zykluszeiten zugleich wirtschaftlich mit dem als Stabilisator ausgebildeten stabförmigen Lagerelement verbunden werden kann. Gleichzeitig soll eine Lageranordnung zur Lagerung eines als Stabilisator ausgebildeten stabförmigen Lagerelements unter Verwendung eines solchen Elastomerlagers bereitgestellt werden.

Diese Aufgabe wird gemäß einem ersten Aspekt der vorliegenden Erfindung gelöst durch ein gattungsgemäßes Elastomerlager, welches zusätzlich die kennzeichnenden Merkmale des Patentanspruchs 1 aufweist.

Gemäß einem zweiten Aspekt wird die Aufgabe durch eine Lageranordnung gelöst, welche die Merkmale des Patentanspruchs 8 aufweist.

Bevorzugte Ausführungsformen und Weiterbildungen sind Gegenstand der Unteransprüche.

Die Erfindung sieht demnach ein Elastomerlager zur Lagerung eines als Stabilisator ausgebildeten stabförmigen Lagerelements vor, wobei das Elastomerlager zumindest einen Elastomerkörper aufweist, der einen Aufnahmebereich zur Aufnahme des stabförmigen Lagerelements umfasst. Dieser Aufnahmebereich ist derart ausgeführt, dass der Elastomerkörper das Lagerelement umschließen kann und wobei der Aufnahmebereich des Elastomerkörpers mit einem Klebemittel zur Herstellung einer zumindest mittelbaren Klebeverbindung zwischen dem Elastomerkörper und dem stabförmigen Lagerelement versehen ist. Die Erfindung schlägt vor, dass das Klebemittel zumindest im Ausgangszustand als im festen Aggregatzustand vorliegende, dauerklebrige Haftklebemasse ausgebildet ist.

Unter dem Begriff Ausgangszustand ist in diesem Zusammenhang der Zustand des Klebemittels zum Zeitpunkt des Fügens von Elastomerkörper und stabförmigem Lagerelement zu verstehen.

Durch die Erfindung wird es möglich, Fertigungstaktzeiten zu reduzieren, da keine durch ein notwendiges Verdunsten von Lösungsmitteln oder sonstige für einen Aushärtungsprozess notwendige Wartezeiten erforderlich sind. Prozessbedingte Fixierphasen fallen bis auf ein kurzzeitiges Andrücken nach dem Fügevorgang nicht an.

Der Außenumfang des Elastomerkörpers kann im Wesentlichen rund sein oder auch von der Kreisform abweichen. Die den Elastomerkörper durchdringende Öffnung zur Aufnahme des Stabilisators stellt den Aufnahmebereich dar und ist in der Regel säulenförmig, vorzugsweise zylinderförmig, ausgebildet. Der Elastomerkörper wird im Rahmen seiner Herstellung vollständig ausvulkanisiert. Ein späteres Nachvulkanisieren nach dem Fügen mit dem Stabilisator ist nicht erforderlich.

Der durch den Elastomerkörper aufzunehmende Torsionswinkel bei einer durch den Fahrbetrieb bedingten Schwenkung des Stabilisators liegt im Bereich von etwa 10° bis 60°. Der Elastomerkörper weist bevorzugt eine Härte von 50 bis 60 Shore auf. Ein weicher, elastischer Lagerkörper ermöglicht durch intermolekulare Schubverformung den geforderten rotatorischen Freiheitsgrad. Bei der Torsionsbelastung des Elasomerkörpers sollten in dem Elastomer keine Zugspannungen auftreten, da diese die Lebensdauer des Elastomerkörpers erheblich herabsetzen können. Um zu vermeiden, dass während des Fahrbetriebes unerwünschte Zugspannungen im Elastomerkörper auftreten, wird dieser mit einer Vorspannung montiert. Das Volumen des entspannten Elastomerkörpers ist daher größer als das Volumen des Elastomerkörpers im verbauten Zustand. Das zur Einstellung der Vorspannung erforderliche Übermaß des Elastomerkörper- Rohlings ist dabei mindestens so groß zu wählen, dass im Einbauzustand bei maximal möglichem Torsionswinkel noch keine schädlichen Zugspannungen im Elastomer auftreten.

Der Elastomerkörper kann einteilig oder mehrteilig ausgeführt sein. Die einteilige Ausführung kann einen die Wandung an einer Stelle in axialer und radialer Richtung durchtrennenden Schlitz aufweisen, um eine Montage durch Aufstecken auf den Stabilisator in radialer Richtung zu ermöglichen. Es kann vorteilhaft sein, den Elastomerkörper zur Vereinfachung der Montage und des Aufbringens der Haftklebemasse zweiteilig mit einer durch die Mittelachse der Öffnung zur Aufnahme des Stabilisators verlaufenden Trennebene auszubilden. Mehrteilige Ausführungen können aus Herstellungsgründen oder Bauraum bedingt erforderlich sein. Durch geometrisch unterschiedlich gestaltete und / oder aus unterschiedlichen Elastomerwerkstoffen hergestellte Elastomerkörper- Segmente lassen sich richtungsabhängige Dämpfungseigenschaften einstellen.

Haftklebemassen liegen im Anlieferzustand hochviskos und dauerklebrig vor. Nach dem Aufbringen auf die Klebestelle wird die Klebeverbindung durch Zusammendrücken der zu verbindenden Bauteile hergestellt. Haftklebemassen werden unter anderem als sogenannter Transferklebstoff angeboten und können im Handel beispielsweise in Form von doppelseitigem Klebeband auf gewachstem Transferpapier bezogen werden.

In Versuchen hat sich für die Verbindung von Elastomerkörper und Stabilisator eine Haftklebemasse auf Acrylat-Basis als besonders geeignet erwiesen.

Für industrielle Anwendungen werden sehr häufig Acrylathaftklebebänder eingesetzt. Diese weisen eine hohe Temperaturstabilität sowie eine hohe Beständigkeit gegen Lösemittel und ölhaltige Stoffe auf. Acrylathaftklebemassen haben darüber hinaus als unter Sauerstoff- oder Ozoneinfluss alterungsbeständig und witterungsstabil erwiesen.

Das Klebemittel kann auf die an den Aufnahmebereich grenzende Oberfläche des Elastomerkörpers oder auf den Stabilisator bevorzugt flächig aufgetragen werden. Die Oberflächen sind durch geeignete Vorbehandlungsmaßnahmen vor dem Klebemittelauftrag gegebenenfalls zu trocknen und von möglicherweise vorhandenen Fettrückständen sowie Staub- oder Schmutzpartikeln zu befreien. Die Stabilisatoroberfläche weist in der Regel eine Pulverbeschichtung auf oder wird durch eine kathaphoresische Tauchlackierung (KTL) gebildet. Die Haftklebemasse wird vorteilhaft ohne weitere Vorbehandlungsmaßnahmen unmittelbar nach dem Vulkanisieren auf die an den Aufnahmebereich grenzende Oberfläche des Elastomerkörpers aufgebracht. Wird das Klebemittel erst einige Zeit nach der Vulkanisation aufgetragen, ist eine vorherige Vorbehandlung der Elastomeroberfläche erforderlich, um eine negative Beeinflussung der Klebemittelhaftung durch zwischenzeitlich aus dem Elastomer herausdiffundierte Inhaltsstoffe zu vermeiden.

Es kann vorteilhaft sein, das Klebemittel sowohl auf die an den Aufnahmebereich grenzende Oberfläche des Elastomerkörpers als auch auf den Stabilisator aufzutragen. Durch das Aufbringen von Haftklebemassen unterschiedlicher, auf die jeweilige Oberfläche abgestimmter und untereinander verträglicher Zusammensetzung auf die beiden vorgenannten Fügepartner lassen sich gute Haftungseigenschaften erzielen.

Aus Handhabungsgründen ist es vorteilhaft, die Haftklebemasse auf eine Abdeckung aus einem Trennmaterial aufzubringen. Derartige Trennmaterialien werden auch als Releaseliner oder Liner bezeichnet. Für den vorgenannten Anwendungsfall ist die Haftklebemasse bevorzugt flächig als zumindest einseitig, vorteilhaft jedoch beidseitig durch Trennmaterialien eingeschlossener Film mit einer Schichtdicke von ca. 0,1 bis 0,5 Millimeter ausgebildet. Auf diese Weise ist ein gleichmäßiger Kleberauftrag und die Dosierung einer exakt auf den Klebefall abgestimmte Klebemittelmenge möglich. Ein seitliches Austreten von überschüssigem Klebemittel aus der Fügestelle sowie ein Eindringen von Schmutz und Feuchtigkeit in die Verbindungsstelle von Elastomerkörper und Stabilisator bei zu geringer Klebemittelmenge werden dadurch vermieden. Für eine automatisierte Verarbeitung bietet es sich an, die Haftklebemasse als vorkonfektioniert auf die jeweilige Klebestelle abgestimmte, beidseitig durch Trennmaterialien eingeschlossene Klebepads oder Stanzlinge bereitzustellen. Unmittelbar vor dem Aufbringen des Klebepads auf die vorbereitete Klebestelle des Elastomerkörpers oder des Stabilisators wird die Abdeckung abgezogen. Um eine exakte Positionierung des Klebepads zu der Klebestelle sicherstellen zu können, sollte das Aufbringen mit Hilfe einer Vorrichtung erfolgen. Um das Abziehen der Klebemittelabdeckung zu erleichtern, kann das Trennmaterial auf einer oder auf beiden Seiten mit einer über den Rand des Klebepads überstehenden Lasche versehen sein.

In vorteilhafter Weiterbildung der Erfindung umfasst der Aufnahmebereich des Elastomerkörpers ein rohrförmiges Aufnahmeelement zur Aufnahme des stabförmigen Lagerelements.

Durch die Anordnung des rohrförmigen Aufnahmeelements zwischen Elastomerkörper und Stabilisator wird eine weitere Versteifung des Verbindungsbereichs erreicht. Das rohrförmige Aufnahmeelement kann vorzugsweise in seiner Längserstreckung in mehrere Teilelemente geteilt sein, beispielsweise in zwei Halbschalen. Durch eine solche Teilung wird zu Zugänglichkeit für das Auftragen der Haftklebemasse auf die Innenseiten der schalenförmigen Teile des Aufnahmeelements verbessert. Die rohrförmige Ausbildung des Aufnahmeelements ist nicht auf kreisrunde Querschnitte beschränkt. Es kann auch vorteilhaft sein, von der Kreisform abweichende Querschnitte, beispielsweise ovale Querschnitte oder Polygonprofile, zu verwenden.

Das rohrförmige Aufnahmeelement kann an die Kontur des gegenüberliegenden Fügebereichs des Stabilisators angepasst sein. Es kann auch vorteilhaft sein, das rohrförmige Aufnahmeelement im noch nicht verklebten Zustand von der Geometrie der gegenüberliegenden Klebefläche des Stabilisators abweichend auszuführen, um in dem montierten Endzustand im Fahrzeug gewünschte Vorspannungsverhältnisse im Elastomerkörper durch die Elastizität des für das rohrförmige Aufnahmeelement verwendeten Werkstoffes einstellen zu können.

Vorteilhaft bilden der Elastomerkörper und das rohrförmige Aufnahmeelement einen Vulkanisationsverbund.

Durch die Verbindung des Elastomerkörpers und des rohrförmigen Aufnahmeelements durch Vulkanisation wird ein fester Verbund zwischen diesen Bauteilen erreicht. Die Herstellung erfolgt wirtschaftlich im Rahmen der Erstellung des Elastomerkörpers, indem das in zwei Halbschalen aufgeteilte rohrförmige Aufnahmeelement in das Vulkanisationswerkzeug eingelegt und dann in einem Arbeitsschritt zusammen mit dem Elastomerkörper fertiggestellt wird.

Bevorzugt ist das rohrförmige Aufnahmeelement aus einem Metallwerkstoff, einem Kunststoff oder einem Hybridwerkstoff gebildet.

Die vorgenannten Werkstoffe sind im Fahrzeugbau zur Verbindung mit Elastomeren vielfach erprobt und haben sich bewährt.

Als Metallwerkstoffe für die rohrförmigen Aufnahmeelemente eigenen sich vorzugsweise Werkstoffe auf Basis von Stahl oder Aluminium.

In weiterer Ausgestaltung der Erfindung weist der Elastomerkörper wenigstens ein Versteifungselement auf.

Durch das Versteifungselement kann die Steifigkeit des Elastomerlagers in radialer Richtung erhöht werden. Dies ist insbesondere bei der Verwendung des Elastomerlagers zur Lagerung eines Stabilisators erwünscht. Die vorgenannte radiale Richtung entspricht hierbei in dem im Fahrzeug verbauten Endzustand der Fahrzeuglängsrichtung und der Fahrzeughochrichtung.

Das Versteifungselement kann vorzugsweise aus einem Metallwerkstoff bestehen, ist zumindest im Wesentlichen in das Elastomer des Elastomerkörpers eingebettet und konzentrisch zur Mittelachse des Elastomerkörpers angeordnet. Vorteilhaft werden zwei, bezüglich einer durch die Mittelachse des Elastomerkörpers verlaufenden Ebene spiegelbildlich angeordnete Versteifungselemente verwendet.

Das oder die Versteifungselemente können eben oder schalenförmig, insbesondere als Längsabschnitt einer Zylinderwandung, oder rohrförmig ausgebildet sein.

Für den Vulkanisier-Prozess ist es von Vorteil, dass die Versteifungselemente verteilt auf ihren Flächen mehrere Durchbrüche in Form von Bohrungen oder Ausstanzungen aufweisen. Hierdurch kann der Elastomer, wenn es beim Vulkanisieren in flüssigem Aggregatzustand vorliegt, von einer Seite eines Versteifungselements über die Durchbrüche zur anderen Seite übertreten und so die Versteifungselemente besser allseitig "umfließen", wodurch eine innige Verbindung zwischen dem Elastomer und den Versteifungselementen hergestellt werden kann. Um die Steifigkeit zu erhöhen, können die Versteifungselemente darüber hinaus konturiert, beispielsweise durch das Einbringen von Versteifungssicken, ausgeführt werden.

Vorteilhaft ist eine Ausbildung des Elastomerlagers mit zwei Elastomerkörpern in die jeweils ein Versteifungselement derart eingebettet ist, dass die beiden Versteifungselemente im montierten Endzustand im Fahrzeug im Wesentlichen einen Zylinder bilden. Um zu vermeiden, dass sich die in dieser Ausgestaltungsform gegenüberliegenden freien Abschnitte der im Wesentlichen als Zylinder- Halbschalen vorliegenden Versteifungselemente bei Torsionsbewegungen des Stabilisators berühren und es dadurch zu unerwünschter Geräuschbildung kommt, können die Umfangsabschnitte gemäß der DE 100 49 611 C2 ein nicht geradliniges, zueinander komplementäres Kantenprofil aufweisen.

Bevorzugt weist das Klebemittel einen Träger auf.

Durch den Träger kann die Festigkeit des Klebefilms erhöht und damit die Handhabung vereinfacht werden. Durch den Träger können die Eigenschaften der Klebeverbindung positiv beeinflusst werden.

Als Trägermaterial können beispielsweise Gewebe, Vliese oder Gewirke verwendet werden.

Vorteilhaft liegt das Klebemittel in einer ersten und einer zweiten Klebemittellage vor, wobei die beiden Klebemittellagen verschiedene Zusammensetzungen aufweisen.

Durch die Aufteilung des Klebemittels in zwei Lagen mit unterschiedlichen Zusammensetzungen wird es möglich, das Klebemittel lediglich auf einen Fügepartner aufzutragen und dennoch optimale, auf beide Klebepartner abgestimmte Bauteiloberfläche- Klebemittel- Eigenschaften zu realisieren.

Die Haftklebemasse kann somit in folgenden Variationen vorliegen:
- einschichtig ohne Träger,
- mehrschichtig ohne Träger oder
- beidseitig auf einem Träger, wobei die beiden Haftklebemassen gleiche oder verschiedene Zusammensetzung aufweisen können.

Bei beidseitig auf einem Träger vorhandenen Haftklebemassen ist der Träger bevorzugt im Wesentlichen mittig zwischen den beiden Klebemittellagen angeordnet.

Die vorgeschlagene Lageranordnung für ein Fahrwerk eines Kraftfahrzeuges umfasst ein Elastomerlager wie zuvor beschrieben und ein in dem Aufnahmebereich des Elastomerlagers durch das Klebemittel festgelegtes stabförmiges Lagerelement.

Im Folgenden wird die Erfindung anhand lediglich ein Ausführungsbeispiel darstellender Zeichnungen näher erläutert. Dabei zeigt:
- Fig. 1:: eine Zusammenbaudarstellung einer Ausführungsform eines Elastomerlagers mit darin gelagertem Stabilisator; und
- Fig. 2:: in isometrischer Darstellung eine Detailansicht eines zweiteiligen Elastomerkörpers des Elastomerlagers gemäß Fig. 1.

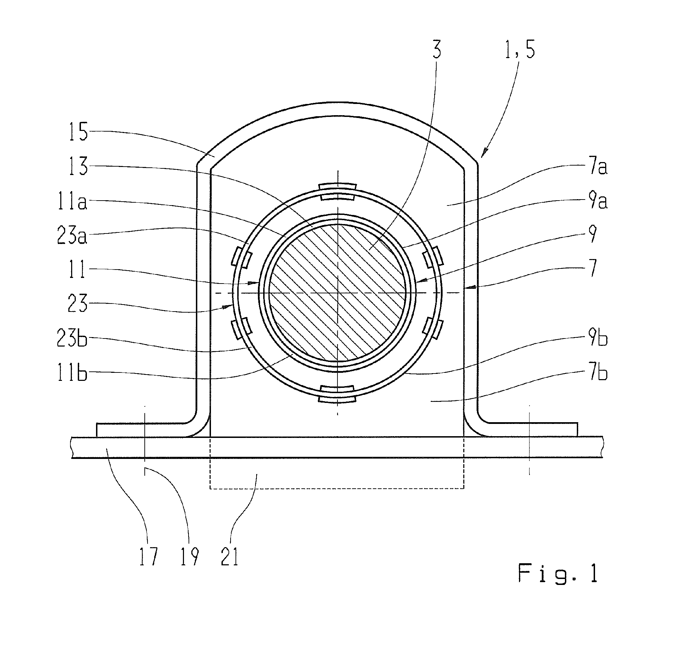

Fig. 1 zeigt ein Elastomerlager 1 mit einem darin gelagerten, im Schnitt dargestellten Stabilisator 3 mit kreisrundem Querschnitt. Diese Anordnung bildet eine Lageranordnung 5. Das Elastomerlager 1 kann allgemein zur Lagerung stabförmiger Lagerelemente 3 verwendet werden. Ferner weist das Elastomerlager 1 einen Elastomerkörper 7 auf. Der Elastomerkörper 7 ist im Ausführungsbeispiel in zwei Hälften 7a, 7b aufgeteilt. Die den Elastomerkörper 7 durchdringende Öffnung zur Aufnahme des Stabilisators 3 stellt den Aufnahmebereich 9 dar. Der Aufnahmebereich 9 ist im Ausführungsbeispiel in zwei Teilbereiche 9a, 9b unterteilt, die durch zwei Ausnehmungen im Elastomerkörper 7 in Form von hälftig geteilten Zylindern gebildet werden. Die Ausnehmungen sind den Elastomerkörperhälften 7a, 7b zugeordnet. In dem Aufnahmebereich 9 ist innenseitig am Umfang ein rohrförmiges Aufnahmeelement 11 angeordnet. Dieses rohrförmige Aufnahmeelement 11 ist ebenfalls in zwei schalenförmige Hälften 11a, 11b unterteilt, die wiederum den Teilbereichen 9a und 9b zugeordnet sind. Das Aufnahmeelement 11 ist durch Vulkanisation mit dem Elastomerkörper 7 verbunden.

Der Stabilisator 3 wird durch das Aufnahmeelement 11 vollständig anliegend umschlossen. Das Aufnahmeelement 11 besteht aus einem Metallwerkstoff auf Basis von Stahl. Es kann auch aus Aluminium, Kunststoff oder einem Hybridwerkstoff gebildet sein. Zwischen dem Aufnahmeelement 11 und dem Stabilisator 3 ist ein Klebemittel 13 angeordnet. Das Klebemittel 13 liegt in Form einer Klebemittelschicht 13 vor, die den Raum zwischen den beiden Fügepartnern Stabilisator 3 und Aufnahmeelement 11 im Wesentlichen vollständig ausfüllt. Durch das Klebemittel 13 werden die beiden Fügepartner im Wesentlichen drehfest miteinander verbunden. Für die Wirkung der Anordnung ist die Elastizität der Klebemittelschicht 13 vernachlässigbar. Durch die Klebeschicht 13 wird eine stoffschlüssige Verbindung zwischen den Fügepartnern hergestellt durch deren Festigkeit gewährleistet ist, dass die über den Stabilisator 3 und das Aufnahmeelement 11 in den Elastomerkörper 7 eingeleiteten Kräfte und Momente sicher übertragen werden. Die Torsionsbewegungen des Stabilisators 3 im Fahrbetrieb werden durch das Elastomer des Elastomerkörpers aufgenommen. Die Klebemittelschicht 13 ist zur Veranschaulichung nicht maßstäblich dargestellt. Die Stärke der Klebemittelschicht 13 liegt tatsächlich im Zehntelmillimeter- Bereich oder sogar noch darunter.

Das Klebemittel 13 ist als eine Haftklebemasse 13 auf Acrylat-Basis ausgebildet und liegt einschichtig ohne Träger vor. Es ist ebenfalls möglich, Haftklebemassen 13 auf Acrylat-Basis zu verwenden, die mehrschichtig ohne Träger oder beidseitig auf einem Träger angeordnet sind, wobei die beiden Haftklebemassen 13 im letztgenannten Fall gleiche oder verschiedene Zusammensetzung aufweisen können.

Der den Stabilisator 3 umschließende Elastomerkörper 7 wird in dem in Fig. 1 dargestellten Einbauzustand durch einen Ω- förmigen Bügel 15 umfangsseitig eingefasst. Der Bügel 15 wird über Durchgangsbohrungen in den Laschen des Bügels 15 mit einer Fahrzeugkarosserie 17, die hier lediglich schematisch angedeutet ist, verbunden. Dies geschieht in der Regel durch Schraubverbindungen 19, die hier ebenfalls nur schematisch angedeutet sind. Das Einfassen des Elastomerkörpers 7 kann ebenfalls durch zwei im Wesentlichen identische Schellen erfolgen, die den Elastomerkörper 7 in etwa zur Hälfte umgreifen. Derartige Schellen sind beispielsweise aus der DE 10 2010 033 036 A1 bekannt.

Die für die Befestigung des durch den Elastomerkörper 7 aufgenommenen Stabilisators 3 erforderlichen Schellen oder Bügel 15 weisen bevorzugt in Umfangsrichtung verlaufende Sicken auf, die zusammen mit Form korrespondierenden Ausnehmungen in dem Elastomerkörper 7 einem Wandern des eingebauten Stabilisators 3 in Fahrzeugquerrichtung entgegenwirken.

Um zu vermeiden, dass während des Fahrbetriebes unerwünschte Zugspannungen im Elastomerkörper 7 auftreten, wird dieser mit einer Vorspannung montiert. Das Volumen des entspannten Elastomerkörpers 7 ist daher größer als das Volumen des Elastomerkörpers 7 im verbauten Zustand. Die Volumendifferenz 21 zwischen entspanntem und verbautem Zustand ist schematisch angedeutet.

Zentrisch zum Mittelpunkt des Elastomerlagers 1, der im Ausführungsbeispiel dem Mittelpunkt des Stabilisatorquerschnitts entspricht, ist in das Elastomer des Elastomerkörpers 7 ein rohrförmiges Versteifungselement 23 im Wesentlichen vollständig eingebettet. Das rohrförmige Versteifungselement 23 ist in zwei schalenförmige Hälften 23a, 23b unterteilt. Durch das Versteifungselement 23 wird die Steifigkeit des Elastomerlagers 1 in radialer Richtung, also in Zeichenebene der Fig. 1, erhöht.

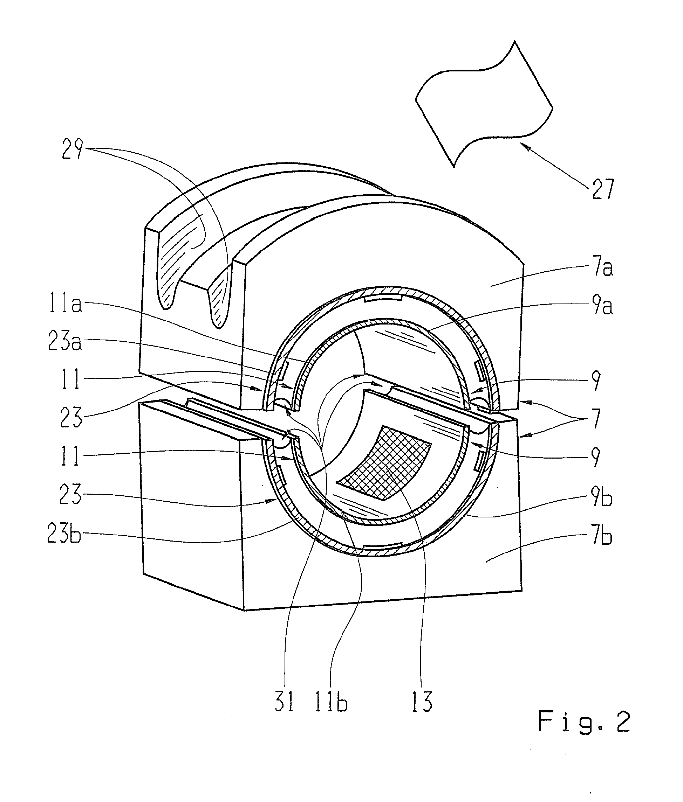

In Figur 2 ist der Elastomerkörper 7 perspektivisch dargestellt. Es ist zu erkennen, dass das Aufnahmeelement 11 und das Versteifungselement 23 stirnseitig geringfügig aus dem Elastomerkörper 7 hervorstehen. Dies hat fertigungstechnische Gründe. Die angedeutete Klebemittelschicht 13 wird im Anlieferzustand des Elastomerkörpers 7 durch eine schematisch dargestellte, bereits abgezogene Abdeckung 27 aus einem Trennmaterial geschützt.

An der Oberseite des Elastomerkörpers 5 sind im Einbauzustand in Fahrzeuglängsrichtung verlaufende, sickenförmige Ausnehmungen 29, die auf die Geometrie des Bügels 15 in diesem Bereich abgestimmt sind, zu erkennen.

In dem Bereich, in dem sich die freien Enden der Aufnahmeelementehälften 11a, 11 b und der Versteifungselementehälften 23a, 23b gegenüberliegen, sind zwischen den beiden vorgenannten Bauelementen auf der linken und rechten Seite jeweils in Axialrichtung verlaufende Rillen 31 mit halbkreisförmigem Querschnitt vorhanden. Diese Rillen 31 sind herstellungsbedingt erforderlich und werden in dem in Fig. 1 dargestellten, vorgespannten Zustand des Elastomerkörpers 7 durch die Vorspannung wieder verschlossen.

Der im Ausführungsbeispiel gezeigte zweiteilige Aufbau des Elastomerkörpers 7 mit den mit diesem verbundenen Bauteilen bietet zum einen den Vorteil, dass eine gute Zugänglichkeit für das Aufbringen der Klebemittelschicht 13 gegeben ist. Zum anderen wird durch den geteilten Aufbau die Montage mit dem Stabilisator 3 erleichtert.

### Bezugszeichen

- 1: Elastomerlager
- 3: Stabilisator, stabförmiges Lagerelement
- 5: Lageranordnung
- 7: Elastomerkörper
- 7a, 7b: Elastomerlagerkörperhälfte
- 9: Aufnahmebereich
- 9a, 9b: Teilbereich des Aufnahmebereichs
- 11: Aufnahmeelement
- 11a, 11b: Hälfte des Aufnahmeelements
- 13: Klebemittel, Klebemittelschicht, Haftklebemasse
- 15: Bügel
- 17: Fahrzeugkarosserie
- 19: Schraubverbindung
- 21: Volumendifferenz
- 23: Versteifungselement
- 23a, 23b: Versteifungselementhälfte
- 27: Abdeckung aus Trennmaterial
- 29: sickenförmige Ausnehmung
- 31: Rille

## Patentansprüche

1. Elastomerlager (1) zur Lagerung eines als Stabilisator (3) ausgebildeten stabförmigen Lagerelements, wobei das Elastomerlager (1) zumindest einen Elastomerkörper (7) aufweist, der einen Aufnahmebereich (9) zur umschließbaren Aufnahme des stabförmigen Lagerelements (3) umfasst, wobei der Aufnahmebereich (9) des Elastomerkörpers (7) ein Klebemittel (13) zur Ausbildung einer zumindest mittelbaren Klebeverbindung zwischen dem Elastomerkörper (7) und dem stabförmigen Lagerelement (3) aufweist, **dadurch gekennzeichnet, dass** das Klebemittel (13) zumindest im Ausgangszustand als im festen Aggregatzustand vorliegende, dauerklebrige Haftklebemasse (13) ausgebildet ist.

2. Elastomerlager (1) nach Anspruch 1, **dadurch gekennzeichnet, dass** der Aufnahmebereich (9) des Elastomerkörpers (7) ein rohrförmiges Aufnahmeelement (11) zur Aufnahme des stabförmigen Lagerelements (3) umfasst.

3. Elastomerlager (1) nach Anspruch 2, **dadurch gekennzeichnet, dass** der Elastomerkörper (7) und das rohrförmige Aufnahmeelement (11) einen Vulkanisationsverbund bilden.

4. Elastomerlager (1) nach Anspruch 2 oder 3, **dadurch gekennzeichnet, dass** das rohrförmige Aufnahmeelement (9) aus einem Metallwerkstoff, einem Kunststoff oder einem Hybridwerkstoff gebildet ist.

5. Elastomerlager (1) nach einem der Ansprüche 1 bis 4, **dadurch gekennzeichnet, dass** der Elastomerkörper (7) wenigstens ein Versteifungselement (23) aufweist.

6. Elastomerlager (1) nach einem der Ansprüche 1 bis 5, **dadurch gekennzeichnet, dass** das Klebemittel (13) einen Träger aufweist.

7. Elastomerlager (1) nach einem der Ansprüche 1 bis 6, **dadurch gekennzeichnet, dass** das Klebemittel (13) in einer ersten und einer zweiten Klebemittellage vorliegt, wobei die beiden Klebemittellagen verschiedene Zusammensetzungen aufweisen.

8. Lageranordnung (5) für ein Fahrwerk eines Kraftfahrzeuges umfassend ein Elastomerlager (1) nach einem der Ansprüche 1 bis 7 und ein in dem Aufnahmebereich (9) des Elastomerlagers (1) durch das Klebemittel (13) festgelegtes stabförmigen Lagerelement (3).
